# EUROPÄISCHE PATENTSCHRIFT

(11) **EP 3 207 229 B1**
(45) Veröffentlichungstag und Bekanntmachung des Hinweises auf die Patenterteilung: **15.08.2018**
(21) Anmeldenummer: 15781116.7
(22) Anmeldetag: 15.10.2015
(51) Int. Cl.: F01N 3/027, F01N 3/20, F01N 3/28, F01N 13/00, B01J 35/00, B01J 37/02, B01D 53/94, B01J 35/04

(54) **TRAGSTRUKTUR, VORRICHTUNG ZUR BEHANDLUNG VON ABGASEN UND VERFAHREN ZU DEREN HERSTELLUNG**
SUPPORT STRUCTURE, DEVICE FOR TREATING EXHAUST GAS AND METHOD OF ITS MANUFACTURING
STRUCTURE PORTEUR, DISPOSITIF POUR LE TRAITEMENT DE GAZ D'ÉCHAPPEMENT ET SON PROCÉDÉ DE FABRICATION

(30) Priorität: 16.10.2014 DE 102014115063
(43) Veröffentlichungstag der Anmeldung: 23.08.2017
(73) Patentinhaber: Continental Automotive GmbH, 30165 Hannover (DE)
(72) Erfinder: MENGELBERG, Markus, 51429 Overath (DE)
(86) Internationale Anmeldenummer: PCT/EP2015/073922
(87) Internationale Veröffentlichungsnummer: WO 2016/059176

(56) Entgegenhaltungen:
- EP-B1- 0 783 621
- DE-A1- 10 055 447
- DE-A1- 19 943 846
- DE-A1-102011 120 720
- JP-A- H11 253 814

## Beschreibung

Die vorliegende Erfindung betrifft eine Tragstruktur. Derartige Tragstrukturen werden insbesondere in Abgasnachbehandlungsanlagen von Kraftfahrzeugen eingesetzt. Darüber hinaus betrifft die vorliegende Erfindung eine Vorrichtung zur Behandlung von Abgasen und ein Verfahren zu deren Herstellung.

Um die Emission von Schadstoffen von Verbrennungskraftmaschinen, insbesondere in Kraftfahrzeugen, zu begrenzen, werden seit langem katalytische Konverter und/oder Partikelfilter oder dergleichen zum Reinigen des Abgases eingesetzt. Damit eine katalytisch unterstützte Umwandlung der Schadstoffe stattfindet, muss das Abgas und/oder der katalytische Konverter bzw. der Partikelfilter eine vorgegebene Mindesttemperatur aufweisen. Insbesondere nach einem Kaltstart oder Neustart der Verbrennungskraftmaschine ist eine solche Mindesttemperatur oft noch nicht erreicht. Es wird daher versucht, die Temperatur des Abgases und/oder des katalytischen Konverters bzw. Partikelfilters durch elektrisch betriebene Heizelemente zu erhöhen.

So geht beispielsweise aus der EP-B1-0783621 ein elektrisch beheizbarer Katalysator hervor, der mit zwei Wabenkörpern ausgebildet ist. Der erste Wabenkörper ist dabei an eine elektrische Spannungsquelle angeschlossen und kann mit Strom durchflossen werden. Aufgrund der ohmschen Widerstandserwärmung erfolgt dann eine signifikante Erwärmung der Blechfolien des ersten Wabenkörpers, wobei die damit in Kontakt befindliche katalytische Beschichtung des ersten Wabenkörpers und/oder das den ersten Wabenkörper durchströmende Abgas erhitzt wird. Aus Stabilitätsgründen ist zudem vorgesehen, dass dieser erste Wabenkörper mittels Stiften und Halteelementen gegen einen nachfolgend angeordneten zweiten Wabenkörper abgestützt ist. Zudem sind die Stifte und Halteelemente dazu geeignet die beiden Wabenkörper voneinander elektrisch zu isolieren. Eine solche Ausgestaltung eines elektrisch beheizbaren Katalysators hat sich bereits sehr bewährt, verlangt aber noch immer einen relativ hohen Aufwand bei der Herstellung.

Die Verbindung zweier Wabenkörper mittels Stiften erfolgt regelmäßig derart, dass die Stifte sowohl in einen Hohlraum des ersten Wabenkörpers, als auch in einen direkt gegenüberliegenden Hohlraum des zweiten Wabenkörpers eingreifen. Die Herstellung dieser Verbindung erweist sich jedoch als relativ schwierig, weil eine fluchtende und/oder parallele Ausrichtung der Hohlräume benachbarter Wabenkörper schwer zu erreichen ist. Dies gilt insbesondere, wenn die Wabenkörper aus gewickelten Blechlagen gebildet sind und sich die exakte Lage der Hohlräume nach dem Wickeln nicht genau vorhersagen und/oder einstellen lässt, wodurch erhöhte Herstellkosten und eine relativ lange Montagedauer auftreten.

Hiervon ausgehend ist es Aufgabe der vorliegenden Erfindung, die mit Bezug auf den Stand der Technik geschilderten Probleme zumindest teilweise zu lösen. Insbesondere soll auch eine Tragstruktur angegeben werden, mit welcher eine möglichst einfache und schnell zu realisierende Verbindung eines elektrisch bestrombaren Wabenkörpers mit einem weiteren Wabenkörper erreicht werden kann. Zudem soll diese Tragstruktur gleichwohl stabil ausgeführt und flexibel einsetzbar sein. Weiter soll diese Tragstruktur gezielte elektrisch isolierende Eigenschaften aufweisen und den Umgebungsbedingung in einer Abgasanlage dauerhaft standhalten.

Darüber hinaus soll eine Vorrichtung, umfassend mindestens zwei Wabenkörper und mindestens eine diese Wabenkörper miteinander verbindende Tragstruktur angegeben werden, wobei diese Vorrichtung einfach und schnell herstellbar und insgesamt mit einer geringen Anzahl von Einzelteilen realisierbar ist. Zudem soll diese Vorrichtung reparaturfreundlich und gleichzeitig von der Tragstruktur stabilisiert sein. Es steht weiter im Fokus, einen kontrollierbaren Stromfluss durch den elektrisch bestrombaren Wabenkörper auch unter verschiedensten Umgebungsbedingungen aufrechtzuerhalten, insbesondere unter Berücksichtigung der thermischen Ausdehnungsverhalten im Hinblick auf Temperaturschwankungen und/oder Druckimpulsen in der Abgasnachbehandlungsanlage. Darüber hinaus soll die Vorrichtung einen relativ geringen Druckverlust ausbilden, wenn diese Vorrichtung von einem Abgas durchströmt wird. Weiter soll auch ein Verfahren zur Herstellung einer entsprechenden Vorrichtung angegeben werden.

Zudem soll ein Verfahren angegeben werden, mit dem elektrisch bestrombare Wabenkörper einfacher hergestellt werden können, insbesondere schmale elektrisch bestrombare "Wabenkörper" mit einem großen Außendurchmesser.

Diese Aufgaben werden gelöst mit einer Tragstruktur, einer Vorrichtung und einem Verfahren gemäß den Merkmalen der unabhängigen Patentansprüche. Weitere vorteilhafte Ausgestaltungen der Erfindung sind in den abhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausführungsformen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu kann eine Tragstruktur mit einer ersten Seitenfläche und einer zweiten, gegenüberliegenden Seitenfläche dienen, wobei die Tragstruktur eine elektrische Isolierung aufweist, die einen elektrischen Stromfluss von der ersten Seitenfläche zu der zweiten Seitenfläche verhindert. Die Tragstruktur umfasst weiter mindestens einen Steg, der eine Querschnittsfläche überspannt oder einschließt. Zudem hat die Tragstruktur eine Mehrzahl von ersten Stiften und zweiten Stiften, die sich beidseits der Querschnittsfläche erstrecken. Insbesondere erstrecken sich die ersten Stifte von der ersten Seitenfläche weg und die zweiten Stifte von der zweiten Seitenfläche weg.

Die Tragstruktur ist insbesondere eingerichtet und ausgebildet, dauerhaft mit Abgasen einer Verbrennungskraftmaschine zusammenzuwirken, also ist diese insbesondere hochtemperaturfest (z. B. bei Temperaturen oberhalb 600 °C, oder sogar oberhalb 800 °C, oder sogar oberhalb 950°C). Insbesondere ist die Tragstruktur dazu ausgebildet, zwei Wabenkörper miteinander zu verbinden und/oder gegeneinander abzustützen, so weist diese insbesondere eine im Wesentlichen (starre bzw.) formsteife Konstruktion auf. Zudem kann die Tragstruktur zwei Wabenkörper elektrisch voneinander isolieren. Bevorzugt hat die Tragstruktur im Wesentlichen nur eine entsprechende Haltefunktion und Isolierungsfunktion.

Die erste Seitenfläche und die zweite Seitenfläche können als (voneinander abgewandte) Seiten der Oberfläche der Tragstruktur verstanden werden und insbesondere auch der Oberfläche des mindestens einen Steges. Zumindest die erste Seitenfläche oder die zweite Seitenfläche können (genau) in einer (geometrischen) Ebene mit der Querschnittsfläche liegen.

Der mindestens eine Steg überspannt eine Querschnittsfläche oder schließt diese im Wesentlichen ein. Weist der Steg z. B. eine langgestreckte Form auf, so überspannt er eine Querschnittsfläche. Ist der Steg z. B. in der Form eines Rahmens ausgebildet, so schließt er eine Querschnittsfläche ein. Bei der hier im Fokus stehenden Anwendung kommen Wabenkörper zum Einsatz, die einen Durchmesser von mindestens 70 mm [Millimeter], insbesondere mindestens 90 mm oder sogar mindestens 120 mm haben. Folglich ist bevorzugt, dass die Querschnittsfläche, die von der Tragstruktur und/oder dem mindestens einen Steg überdeckt/eingeschlossen wird, beispielsweise wie folgt zu definieren ist: Der Durchmesser (QF) beträgt mindestens 45 mm [Millimeter] oder mindestens 90 mm oder sogar mindestens 120 mm und/oder der Flächeninhalt (QF) beträgt mindestens 45 cm² [Quadratzentimeter] oder mindestens 60 cm² oder sogar mindestens 110 cm². Dabei wird zumeist eine im Wesentlichen runde oder ovale Form der Querschnittsfläche vorliegen. Vorzugsweise ist die Querschnittsfläche durch eine Stirnseite eines Wabenkörpers definiert und zu dieser parallel ausgerichtet.

Die Tragstruktur kann auch mehrere Stege umfassen. Zum Beispiel zwei Stege, die miteinander verbunden und/oder verbindbar sind. Bevorzugt sind die Stege in der Mitte miteinander stoffschlüssig verbunden, z. B. gelötet (hartgelötet), gesintert, geschweißt oder dergleichen. Die Stege können alternativ und kumulativ miteinander kraftschlüssig und/oder formschlüssig verbunden und/oder verbindbar sein, z. B. in der Art einer Feder-Nut-Verbindung. Bevorzugt sind mindestens zwei Stege aneinander, insbesondere mittig und/oder zentrisch, angeformt und besonders bevorzugt einstückig ausgebildet. Die Stege können in der Form eines Gitters, eines Rahmens, eines Kreises, eines Kreuzes oder dergleichen angeordnet sein. Die Stege können zudem eine X-, Y-, Z-, V-, W-Form oder dergleichen ausbilden. Ebenfalls vorteilhaft ist es, wenn die Stege derart miteinander verbunden und/oder verbindbar sind, dass sie sich relativ zueinander bewegen können. Die Stege können zueinander drehbar ausgeführt sein.

Insbesondere sind die Stifte auf dem mindestens einen Steg und bevorzugt auf jedem Steg angeordnet. Vorzugsweise werden die ersten Stifte und die zweiten Stifte von dem Steg gehalten. Hierzu kann der Steg zumindest einen Kopfbereich eines jeweiligen Stiftes aufnehmen und/oder halten.

Die ersten Stifte und die zweiten Stifte können zumindest anteilig fluchtend und/oder parallel zueinander angeordnet sein. Die ersten Stifte und die zweiten Stifte können weiter zumindest anteilig auch versetzt zueinander angeordnet sein. Hierbei kann ein Versatz der Hohlräume zwischen dem ersten Wabenkörper und dem zweiten Wabenkörper vorliegen, welcher mittels der Tragstruktur ausgeglichen wird, insbesondere mittels einer Relativbewegung der ersten Stifte und/oder der zweiten Stifte (bezogen auf die Tragstruktur), die bevorzugt bei der Montage ausgeführt wird. Sind die ersten Stifte und zweiten Stifte zumindest anteilig (räumlich) versetzt zueinander angeordnet, so kann die Tragstruktur z. B. selbst einen (radialen und/oder axialen) Versatz der ersten Hohlräume des ersten Wabenkörpers und der zweiten Hohlräume des zweiten Wabenkörpers ausgleichen.

Die Tragstruktur und/oder der mindestens eine Steg können eine Vielzahl von Stiften haben, beispielsweise mindestens 5 Stifte, bevorzugt mindestens 15 Stifte oder sogar mindestens 30 Stifte. Mit einer hohen Anzahl an Stiften kann eine stabile Verbindung des ersten Wabenkörpers und des zweiten Wabenkörpers erreicht werden. Zur Einhaltung eines einfachen und kostengünstigen Herstellungsprozesses und einer noch ausreichend flexiblen Halterung im Abgassystem wird empfohlen, dass maximal 100 Stifte vorgesehen sind, bevorzugt maximal 80 Stifte oder sogar maximal 60 Stifte.

Der mindestens eine Steg und die Stifte können mit unterschiedlichen Werkstoffen gebildet sein. Der Steg ist bevorzugt zumindest teilweise mit einer Keramik gebildet. Die Stifte sind bevorzugt zumindest teilweise mit einem Metall gebildet.

Die elektrische Isolierung kann Teil der Stifte und/oder Teil des Steges sein. Bevorzugt ist der Steg mit einem elektrisch isolierenden Material gebildet. Der Steg kann zumindest teilweise im Bereich der ersten Seitenfläche und/oder der zweiten Seitenfläche mit einer elektrisch isolierenden Schicht und/oder Beschichtung oder dergleichen ausgeführt sein. Eine solche Schicht und/oder Beschichtung kann z. B. mit Keramik (Al₂O₃) ausgeführt sein. Die Stifte können zumindest im Inneren elektrisch isolierend und außen, jedoch nicht an der gesamten Außenseite, metallisch sein. Bevorzugt weisen die Stifte außen einen metallischen Überzug an mindestens einem Kopfbereich auf. Besonders bevorzugt ist hier auch, dass der Steg und die Stifte aneinander angeformt und/oder einstückig und weiter bevorzugt gemeinsam aus einem elektrisch isolierenden Werkstoff, insbesondere einer Keramik, gebildet sind. Dann sind bevorzugt (nur) die vom Steg weg gerichteten Kopfbereiche der Stifte außen zumindest teilweise mit einem Metall gebildet und/oder überzogen und/oder beschichtet.

Die elektrische Isolierung verhindert einen elektrischen Stromfluss von der ersten Seitenfläche zu der zweiten Seitenfläche der Tragstruktur. Insbesondere wird ein Stromfluss von mindestens einem ersten Stift zu mindestens einem zweiten Stift verhindert. Mit anderen Worten ausgedrückt unterbindet die elektrische Isolierung im Einsatzfall einen Stromfluss von einem ersten Wabenkörper, der mit den ersten Stiften verbunden ist, hin zu einem zweiten Wabenkörper, der mit den zweiten Stiften verbunden ist.

Bevorzugt ist auch, dass mindestens ein Steg ein äußeres Rahmenteil ausbildet und mit mindestens einem weiteren Steg, der von dem äußeren Rahmenteil nach innen weist, zumindest verbunden oder verbindbar ist. Insbesondere weist das äußere Rahmenteil die Form eines rechteckigen oder eines runden oder eines ovalen Rahmens auf. Vorzugsweise schließt das äußere Rahmenteil eine Querschnittsfläche ein, welche auch zumindest teilweise von dem mindestens einen weiteren Steg überspannt ist. "Innen" meint hier den Bereich, der von dem Rahmenteil eingeschlossen ist. Eine Innenrichtung geht insbesondere von dem Rahmenteil aus und zeigt in die Mitte des von dem Rahmenteil eingeschlossenen Querschnitts.

Der mindestens eine weitere Steg weist von dem äußeren Rahmenteil nach innen und ist bevorzugt an das Rahmenteil angeformt. Weiter bevorzugt sind das Rahmenteil und der mindestens eine weitere Steg einstückig ausgebildet. Dies ist jedoch nicht zwingend erforderlich, weil der mindestens eine weitere Steg auch bewegbar mit dem Rahmenteil verbunden sein kann. Bevorzugt ist der Steg fest mit dem Rahmenteil verbunden. Der Steg kann sich insbesondere von einem Punkt zu einem weiteren (beabstandeten oder sogar gegenüberliegenden) Punkt des Rahmenteils erstrecken. Es können mindestens drei oder mindestens vier mit dem Rahmenteil verbundene und nach innen weisende Stege vorgesehen sein. Diese Stege können sich kontaktieren und miteinander verbunden und/oder verbindbar sein. Weiter bevorzugt sind sie in einem Mittelbereich des Querschnitts, der von dem Rahmenteil eingeschlossen wird, miteinander verbunden und/oder verbindbar. Auch hier kann eine bewegbare Verbindung vorgesehen sein.

Die Tragstruktur kann auch mehrere Rahmenteile aufweisen, welche nebeneinander auf der Querschnittsfläche angeordnet sind und jeweils einen Bereich der Querschnittsfläche einschließen. Es können jedoch auch mindestens zwei Rahmenteile übereinander und/oder aufeinander angeordnet sein, wobei insbesondere beide Rahmenteile denselben Bereich der Querschnittsfläche einschließen. Diese Rahmenteile können auch bewegbar und/oder drehbar aufeinander und/oder zueinander verschwenkbar angeordnet sein. Jedes der zuvor genannten Rahmenteile kann mit mindestens einem weiteren Steg, der von dem äußeren Rahmenteil nach innen weist, verbunden und/oder verbindbar sein.

Vorzugsweise ist mindestens ein Teil der zweiten Stifte beweglicher ausgebildet, als ein Teil der ersten Stifte. Es kann auch ein Teil der ersten Stifte beweglicher ausgebildet sein als ein Teil der zweiten Stifte. Hierzu kann ein Teil der ersten Stifte und/oder zweiten Stifte z. B. elastischer ausgeführt sein, als ein Teil der zweiten Stifte und/oder ersten Stifte. Insbesondere ist mindestens ein Teil der ersten Stifte und/oder zweiten Stifte in mehreren Bewegungsrichtungen bewegbar und/oder biegbar. Bevorzugt ist ein Teil der ersten Stifte und/oder zweiten Stifte gelenkig mit dem Steg verbunden. "Beweglich" meint hier insbesondere mindestens eine Biegebewegung. Es kann im Bereich der ersten Seitenfläche und/oder zweiten Seitenfläche jedoch auch mindestens eine Führung auf und/oder an dem Steg ausgebildet sein, welche mindestens einen ersten Stift und/oder zweiten Stift hält und bevorzugt eine (translatorische und/oder verschiebende) Bewegung des Stiftes in der Führung ermöglicht. Dass mindestens ein Teil der ersten Stifte und/oder zweiten Stifte beweglicher ausgebildet ist, als ein Teil der zweiten Stifte und/oder ersten Stifte dient insbesondere dazu, dass die ersten Stifte und/oder zweiten Stifte zu entsprechenden Hohlräumen des ersten Wabenkörpers und/oder des zweiten Wabenkörpers ausgerichtet werden können. Ein Teil meint hier insbesondere eine vorgegebene Anzahl von Stiften. Bevorzugt sind mindestens 30% der ersten Stifte bzw. zweiten Stifte beweglicher ausgebildet, als mindestens 30% der zweiten Stifte bzw. ersten Stifte. Insbesondere sind mindestens 50% der ersten Stifte bzw. zweiten Stifte beweglicher ausgebildet, als mindestens 50% der zweiten Stifte bzw. ersten Stifte. Es können sogar mindestens 80% der ersten Stifte bzw. zweiten Stifte beweglicher ausgebildet sein, als mindestens 50% der zweiten Stifte bzw. ersten Stifte.

Generell kann mindestens ein erster Stift und/oder mindestens ein zweiter Stift beweglich und/oder bewegbar mit einem Steg verbunden sein. Bevorzugt sind die ersten Stifte und/oder die zweiten Stifte jedoch fest bzw. ortsfest mit dem Steg verbunden.

Bevorzugt ist, dass die Tragstruktur mindestens einen Steg umfasst, der zumindest in einer Länge veränderbar ist. Somit kann der Steg in einer Länge bewegbar und/oder verformbar sein. Die Länge kann durch ein Ziehen und/oder Dehnen veränderbar sein.

Gemäß einer weiteren zweckmäßigen Ausführungsform sind zumindest die ersten Stifte oder die zweiten Stifte jeweils mit einem langgestreckten Körper und zwei sich gegenüberliegenden Kopfbereichen ausgeführt, wobei eine Stiftisolierung zumindest in dem Körper oder zumindest teilweise um den Körper (herum) angeordnet ist und mindestens ein Kopfbereich zumindest teilweise außen mit einem Metall ausgebildet ist. Bevorzugt weisen die Stifte einen innenliegenden elektrisch leitenden oder nicht-leitenden Kern auf. Dieser (elektrisch leitende) Kern ist weiter bevorzugt zumindest teilweise mit einer elektrisch isolierenden Schicht und/oder Beschichtung (vollständig) umgeben. Diese Schicht und/oder Beschichtung ist insbesondere in der Form eines Hohlzylinders und mit Keramik gebildet. Insbesondere an mindestens einem Kopfbereich ist der Stift auch in Richtung der Stiftachse elektrisch isoliert. Die Stiftachse betrifft insbesondere die Mittelachse des Stiftes. An dem mindestens einen Kopfbereich ist weiter bevorzugt außen eine metallische Schicht und/oder Beschichtung aufgebracht. Diese Ausbildung ist jedoch nicht zwingend, weil auch erste Stifte und/oder zweite Stifte mit einem langgestreckten Körper und mit einem elektrisch nicht-leitenden Werkstoff, z. B. Keramik, gebildet sein können, wobei die ersten Stifte und/oder die zweiten Stifte an mindestens einem Kopfbereich zumindest teilweise außen mit einem Metall und/oder einer Metallschicht ausgebildet und/oder umgeben sind, insbesondere beschichtet sind.

Gemäß einem weiteren Aspekt wird auch eine Vorrichtung zur Behandlung von Abgasen vorgeschlagen, umfassend mindestens einen ersten, elektrisch bestrombaren Wabenkörper, der zumindest teilweise (für ein Fluid bzw. Abgas) durchströmbare erste Hohlräume aufweist und mindestens einen zweiten, benachbart angeordneten Wabenkörper, der zumindest teilweise (für ein Fluid bzw. Abgas) durchströmbare zweite Hohlräume aufweist und mindestens eine zwischen dem ersten Wabenkörper und dem zweiten Wabenkörper angeordnete Tragstruktur der hier vorgeschlagenen Art, wobei die ersten Stifte zum ersten Wabenkörper und die zweiten Stifte zum zweiten Wabenkörper gerichtet sind und wobei die Tragstruktur den ersten Wabenkörper und den zweiten Wabenkörper voneinander elektrisch isoliert und miteinander verbindet, wobei die ersten Stifte zumindest teilweise mit ersten Hohlräumen verbunden und die zweiten Stifte zumindest teilweise mit zweiten Hohlräumen verbunden sind.

Die ersten Hohlräume und/oder die zweiten Hohlräume sind bevorzugt vollständig durchströmbar, dies ist jedoch nicht zwingend erforderlich. Der zweite Wabenkörper kann beispielsweise auch in der Art eines Partikelfilters oder einer Partikelfalle ausgeführt sein, wobei die Hohlräume insbesondere (wechselseitig) an einem Ende geschlossen ausgeführt sind. Die Hohlräume sind insbesondere mit mindestens einer, zumindest teilweise, strukturierten Metalllage, Folie, Gitter, Vlies oder dergleichen gebildet und/oder begrenzt. Der erste Wabenkörper und/oder der zweite Wabenkörper ist insbesondere metallisch ausgeführt. Zudem bildet der erste Wabenkörper und/oder der zweite Wabenkörper bevorzugt einen metallischen Katalysator-Trägerkörper.

Die Stifte sind insbesondere derart mit den Hohlräumen verbunden, dass die Stifte jeweils mindestens eine Innenseite des entsprechenden Hohlraumes kontaktieren und/oder mit dieser Innenseite verbunden sind. Die Stifte sind insbesondere stoffschlüssig mit den Hohlräumen und/oder der entsprechenden Innenseite verbunden. Die Verbindung kann je nach Materialwahl der Stifte und/oder der Wabenkörper in gelöteter (hartgelöteter), geschweißter, gesinterter oder anderer Art und Weise erfolgen. Insbesondere sind jeweils ein erster Stift mit einem entsprechenden und/oder vordefinierten ersten Hohlraum und jeweils ein zweiter Stift mit einem entsprechenden und/oder vordefinierten zweiten Hohlraum zumindest teilweise verbunden. Es sind insbesondere mehr Hohlräume als Stifte vorhanden.

Es ist nicht zwingend erforderlich, dass die ersten Hohlräume und die zweiten Hohlräume fluchtend und/oder axial parallel zueinander angeordnet sind. Die Tragstruktur kann insbesondere einen radialen und/oder axialen Versatz der ersten und zweiten Hohlräume ausgleichen, insbesondere durch eine entsprechend angepasste Anordnung der ersten Stifte und zweiten Stifte und weiter bevorzugt mittels einer Bewegung zumindest eines Teils der zweiten Stifte. Die zweiten Stifte können auch gebogen und/oder biegbar sein, wodurch diese auch dann in die zweiten Hohlräume eingeführt und/oder mit diesen verbunden werden können, wenn die zweiten Hohlräume sich nicht parallel zu der axialen Richtung durch den zweiten Wabenkörper erstrecken.

Vorzugsweise weist der erste Wabenkörper eine erste Stirnseite und der zweite Wabenkörper eine zweite Stirnseite auf. Insbesondere weisen die erste Stirnseite und die zweite Stirnseite aufeinander zu. Die mindestens eine Tragstruktur ist dann zwischen der ersten Stirnseite und der zweiten Stirnseite angeordnet. Die Tragstruktur kontaktiert insbesondere die erste Stirnseite und/oder die zweite Stirnseite. Zumindest die erste Stirnseite oder die zweite Stirnseite können in einer (geometrischen) Ebene mit der Querschnittsfläche liegen. Die Querschnittsfläche kann auch in einer (geometrischen) Ebene liegen, welche zwischen der ersten Stirnseite und der zweiten Stirnseite liegt und zu diesen im Wesentlichen parallel ist.

Die mindestens eine Tragstruktur und/oder der mindestens eine Steg können somit auch einen Teil der ersten Stirnseite und/oder der zweiten Stirnseite überspannen oder einschließen. Insbesondere können die mindestens eine Tragstruktur und/oder der mindestens eine Steg auch einen Abdeckungsanteil der ersten Stirnseite und/oder der zweiten Stirnseite bedecken. Ein solcher Abdeckungsanteil beträgt insbesondere höchstens 50%, bevorzugt höchstens 30% oder sogar nur höchstens 20%. Wenn der Abdeckungsanteil zu hoch ist, wird die Durchströmung der Wabenkörper zu stark beeinträchtigt und es kommt zu einem zu hohen Druckverlust in der Abgasnachbehandlungsanlage.

Der erste, bestrombare Wabenkörper weist insbesondere Teilbereiche auf, welche im bestromten Zustand nicht in elektrischen Kontakt zueinander gelangen dürfen. Die Tragstruktur verhindert dies in vorteilhafter Weise, weil die ersten Stifte, welche den elektrisch bestrombaren Wabenkörper stützen auch verhindern, dass die stromführenden Teilbereiche ungewollt in Kontakt gelangen. Insbesondere werden die (im bestromten Zustand) stromführenden Teilbereiche des elektrisch bestrombaren Wabenkörpers durch die ersten Stifte gehalten und/oder derart zueinander fixiert, dass ein elektrischer Kurzschluss zwischen den Teilbereichen verhindert wird. Hierzu sind insbesondere isolierende Spalte zwischen den stromführenden Teilbereichen vorgesehen, die auch bei einer thermischen Ausdehnung des elektrisch bestrombaren Wabenkörpers aufrechterhalten werden, bevorzugt indem die Stifte den elektrisch bestrombaren Wabenkörper stützen und die isolierenden Spalte aufrechterhalten. Die isolierenden Spalte können mit Luft und/oder mindestens einem anderen isolierenden Mittel und/oder mindestens einem isolierenden Material gefüllt sein. Der elektrische Stromfluss kann daher über den gesamten vordefinierten Weg durch den bestrombaren Wabenkörper (z. B. zwischen zwei Elektroden) fließen.

Weiter bevorzugt ist auch ein Kraftfahrzeug mit einer Abgasnachbehandlungsanlage, einer Stromversorgungseinheit und zumindest einer hier vorgeschlagenen Tragstruktur und/oder einer hier vorgeschlagener Vorrichtung. Zudem kann das Kraftfahrzeug eine Verbrennungskraftmaschine, eine Abgasleitung und eine Kontrolleinheit aufweisen, wobei die Kontrolleinheit mit der Stromversorgungseinheit und der hier vorgeschlagenen Vorrichtung verbindbar und/oder verbunden sein kann. Hierdurch kann auch eine Steuerung und/oder Regelung der hier vorgeschlagenen Vorrichtung erfolgen.

Gemäß einem weiteren Aspekt wird auch ein Verfahren zur Herstellung einer Vorrichtung zur Behandlung von Abgasen vorgeschlagen, umfassend mindestens die folgenden Schritte:
(I) Bereitstellen eines ersten Wabenkörpers, der zumindest teilweise durchströmbare erste Hohlräume aufweist und eines zweiten Wabenkörpers, der zumindest teilweise durchströmbare zweite Hohlräume aufweist,
(II) Bereitstellen einer Tragstruktur der hier vorgeschlagenen Art,
(III) Ausrichten der Tragstruktur zwischen dem ersten Wabenkörper und dem zweiten Wabenkörper, wobei die ersten Stifte zum ersten Wabenkörper und die zweiten Stifte zum zweiten Wabenkörper ausgerichtet werden und wobei die ersten Stifte zumindest teilweise in erste Hohlräume eingeführt werden und die zweiten Stifte zumindest teilweise in zweite Hohlräume eingeführt werden,
(IV) Verbinden der Tragstruktur mit dem ersten Wabenkörper und dem zweiten Wabenkörper.

Bevorzugt wird in Schritt (I) zumindest der erste Wabenkörper und/oder der zweite Wabenkörper durch Wickeln bzw. Winden bzw. Stapeln von mindestens einer zumindest teilweise strukturierten Metalllage und/oder (Metall-)Folie gebildet. Weiter bevorzugt erfolgt in Schritt (I) auch ein (nachgelagerter) thermischer Fügeprozess der Metalllage.

Falls erforderlich, wird in Schritt (III) zumindest ein Teil der ersten Stifte oder ein Teil der zweiten Stifte relativ zum Steg bewegt.

Bevorzugt ist auch, dass Schritt (I) eine Herstellung zumindest des ersten Wabenkörpers oder des zweiten Wabenkörpers mindestens die folgenden Zwischenschritte umfasst:
(Ia) Erzeugen einer Metallwabenstruktur mit mindestens einer zumindest teilweise strukturierten metallischen Folie,
(Ib) Löten (Hartlöten) oder Schweißen der Metallwabenstruktur,
(Ic) Abtrennen einer Scheibe von der Metallwabenstruktur zur Bildung zumindest des ersten Wabenkörpers oder des zweiten Wabenkörpers.

Die zumindest teilweise strukturierte Folie kann insbesondere als eine zumindest teilweise glatte und/oder zumindest teilweise gewellte Metalllage und/oder (Metall-)Folie ausgeführt sein. In Zwischenschritt (Ia) wird die mindestens eine zumindest teilweise strukturierte Folie insbesondere gewickelt, gewunden und/oder gestapelt. Diese Anordnung wird dann gemäß Zwischenschritt (Ib) durch einen Lötprozess (insbesondere einen Hochtemperatur-Vakuum-Lötprozess) miteinander gefügt, so dass die mindestens eine metallische Folie eine stabile Metallwabenstruktur bildet. In Zwischenschritt (Ic) wird dann insbesondere mittels eines Trennvorgangs eine bevorzugt schmale Scheibe von der Metallwabenstruktur getrennt und/oder geschnitten. Dieser Trennvorgang kann mittels eines Schneiddrahtes, zumindest eines Laserstrahls oder dergleichen erfolgen. Durch das Abtrennen einer Scheibe von der Metallwabenstruktur können insbesondere große Durchmesser bei einer vergleichsweise schmalen Scheibe erreicht werden. Dieses Vorgehen bietet sich insbesondere dann an, wenn ein Verhältnis von (axialer) Dicke zu (radialem) Durchmesser der Scheibe bzw. des ersten/zweiten Wabenkörpers zumindest 1:3, 1:5, 1:8 oder sogar 1:12 beträgt. Die Metallwabenstruktur ist insbesondere rotationssymmetrisch und/oder hat eine Mittelachse, welche auch eine axiale Richtung definiert. Es ist darüber hinaus vorteilhaft, dass mindestens zwei Scheiben aus der Metallwabenstruktur hergestellt werden können. Diese Scheiben können unterschiedliche Ausbreitungen in axialer Richtung (Dicke) aufweisen. Dies ist jedoch nicht zwingend, weil auch eine Vielzahl gleicher Scheiben aus der Metallwabenstruktur hergestellt werden können.

Wird die Metallwabenstruktur in mindestens zwei Scheiben getrennt, so entstehen insbesondere zwei Wabenkörper, deren Hohlräume fluchtend und parallel zueinander ausgerichtet sind. Dies ist besonders vorteilhaft, weil eine Ausrichtung einer hier vorgeschlagenen Tragstruktur vereinfacht wird, wenn die zwei Wabenkörper vordefinierte und zueinander fluchtende Hohlräume aufweisen. Hierzu kann die Metallwabenstruktur derart ausgeführt, erzeugt, gewickelt, hartgelötet oder geschweißt werden, dass die abgetrennten Scheiben Wabenkörper bilden, die sowohl die Anforderungen an einen elektrisch bestrombaren Wabenkörper erfüllen, als auch die Anforderungen an einen nicht elektrisch bestrombaren Wabenkörper.

Vorzugsweise erfolgt in Schritt (IV) die Verbindung mittels eines Lötvorgangs (Hartlötvorgangs), wobei die ersten Stifte zumindest teilweise mit ersten Hohlräumen verbunden werden und die zweiten Stifte zumindest teilweise mit zweiten Hohlräumen verbunden werden. Bevorzugt kontaktieren die Stifte jeweils mindestens eine Innenseite des entsprechenden Hohlraumes. Während des Schritts (IV) können zudem (gleichzeitig) auch die fügetechnischen Verbindungen in einem (weiteren) Wabenkörper und/oder von mindestens einem Wabenkörper mit einem äußeren Gehäuse ausgebildet werden.

Die Verbindung der Stifte mit den Wabenkörpern wird folglich bevorzugt stoffschlüssig und/oder formschlüssig und/oder kraftschlüssig ausgeführt. Als "stoffschlüssig" werden Verbindungen bezeichnet, bei denen die Verbindungspartner durch atomare und/oder molekulare Kräfte zusammengehalten werden (sog. "Material-Material-Verbindung"). Bei einer hier als "formschlüssig" bezeichneten Verbindung, ist einer der Verbindungspartner einem anderen im Weg, blockiert also zumindest teilweise dessen Bewegungsmöglichkeit, beispielsweise mittels eines Eingriffs oder eines Kontakts. "Kraftschlüssig" bedeutet hier insbesondere, dass die gegenseitige Verschiebung von Verbindungspartnern verhindert wird, solange die durch die Haftreibung bewirkte Gegen-Kraft nicht überschritten wird.

Die vorstehend im Zusammenhang mit der Tragstruktur erörterten Details, Vorteile und besonderen Merkmale sind in entsprechender Weise auf die hier beschriebene Vorrichtung und das Verfahren übertragbar, et vice versa. Zudem sind die vorstehend im Zusammenhang mit der Vorrichtung erörterten Details, Vorteile und besonderen Merkmale in entsprechender Weise auf das hier beschriebene Verfahren übertragbar, et vice versa. Insoweit wird auf die dortigen Ausführungen zur näheren Charakterisierung vollumfänglich Bezug genommen.

Die Erfindung sowie das technische Umfeld werden nachfolgend anhand der Figuren näher erläutert. Es ist darauf hinzuweisen, dass die Figuren besonders bevorzugte Ausführungsvarianten und Details der Erfindung zeigen, diese jedoch nicht darauf beschränkt ist. Dabei sind gleiche Bauteile in den Figuren mit denselben Bezugszeichen versehen. Insbesondere ist nicht anzunehmen, dass alle Details einer Figur separat nur in der dargestellten Weise ausgeprägt sein müssen oder nur in der dargestellten Kombination miteinander auftreten müssen. Sollte eine solche Situation vorliegen, wird hier explizit darauf hingewiesen. Es zeigen schematisch:
- Fig. 1:: eine Querschnittsansicht einer Tragstruktur,
- Fig. 2:: eine perspektivische Ansicht einer Tragstruktur,
- Fig. 3:: eine Draufsicht auf eine Tragstruktur mit einer Führung,
- Fig. 4:: eine Schnittdarstellung eines Stiftes,
- Fig. 5:: eine Draufsicht auf eine weitere Ausführungsvariante der Tragstruktur,
- Fig. 6:: eine Draufsicht auf eine weitere Ausführungsvariante der Tragstruktur,
- Fig. 7:: eine Draufsicht auf eine weitere Ausführungsvariante der Tragstruktur mit einem in der Länge veränderbaren Steg,
- Fig. 8:: eine Draufsicht auf eine Tragstruktur, die mit einem zweiten Wabenkörper verbunden ist,
- Fig. 9:: eine Schnittdarstellung einer Vorrichtung mit einer Tragstruktur,
- Fig. 10:: eine Draufsicht auf eine Tragstruktur, die mit einem zweiten Wabenkörper verbunden ist,
- Fig. 11:: eine weitere Schnittdarstellung einer Vorrichtung mit einer Tragstruktur, und
- Fig. 12:: ein Abtrennen einer Scheibe von einer Metallwabenstruktur.

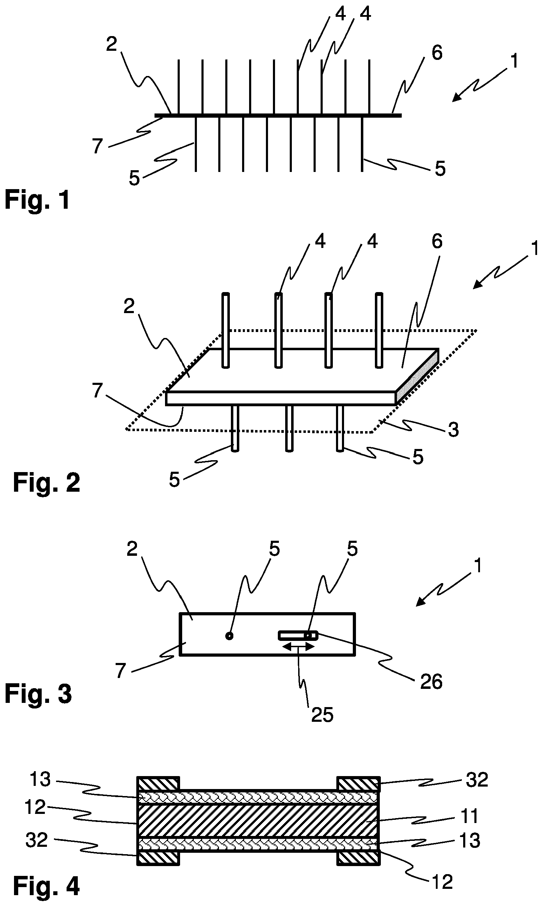

Fig. 1 zeigt schematisch eine Querschnittsansicht einer Tragstruktur 1, mit einer ersten Seitenfläche 6 und einer zweiten, gegenüberliegenden Seitenfläche 7. Die Tragstruktur 1 umfasst mindestens einen Steg 2, der im Wesentlichen eine langgestreckte und rechteckige Querschnittsform aufweist. Eine Mehrzahl von ersten Stiften 4 erstreckt sich von der ersten Seitenfläche 6 weg und eine Mehrzahl von zweiten Stiften 5 erstreckt sich von der zweiten Seitenfläche 7 weg. Die ersten Stifte 4 und die zweiten Stifte 5 werden von dem Steg 2 gehalten.

Fig. 2 zeigt schematisch eine perspektivische Ansicht einer Tragstruktur 1, wiederum mit einer ersten Seitenfläche 6 und einer zweiten, gegenüberliegenden Seitenfläche 7. Der Steg 2 überspannt die Querschnittsfläche 3, welche insbesondere parallel zu der ersten Seitenfläche 6 und der zweiten Seitenfläche 7 ist. Die Querschnittsfläche 3 kann, wie gezeigt, (genau) in einer (geometrischen) Ebene mit der zweiten Seitenfläche 7 liegen. Die ersten Stifte 4 und die zweiten Stifte 5 erstrecken sich beidseits der Querschnittsfläche 3.

Fig. 3 zeigt schematisch eine Draufsicht auf eine Tragstruktur 1, wobei die Draufsicht auf die zweite Seitenfläche 7 gerichtet ist. Die Tagstruktur 1 umfasst einen Steg 2, der zwei zweite Stifte 5 hält. Der rechts dargestellte zweite Stift 5 ist in einer Führung 26 bewegbar. Die Führung 26 hält den zweiten Stift 5 und gewährleistet eine Bewegung des zweiten Stiftes 5 entlang der (translatorischen) Bewegungsrichtung 25, hier nach links und nach rechts. Der linke zweite Stift 5 ist fest mit dem Steg 2 verbunden.

Fig. 4 zeigt schematisch eine Schnittdarstellung eines ersten Stiftes 4 und/oder zweiten Stiftes 5. Es ist ein Körper 11 zu erkennen mit einer Stiftisolierung 13, die den Körper 11 zumindest teilweise umgibt. An den hier links und rechts dargestellten Enden des Stiftes sind zwei sich gegenüberliegende Kopfbereiche 12 zu erkennen. Diese Kopfbereiche 12 sind außen mit einer Metallschicht 32 ausgeführt.

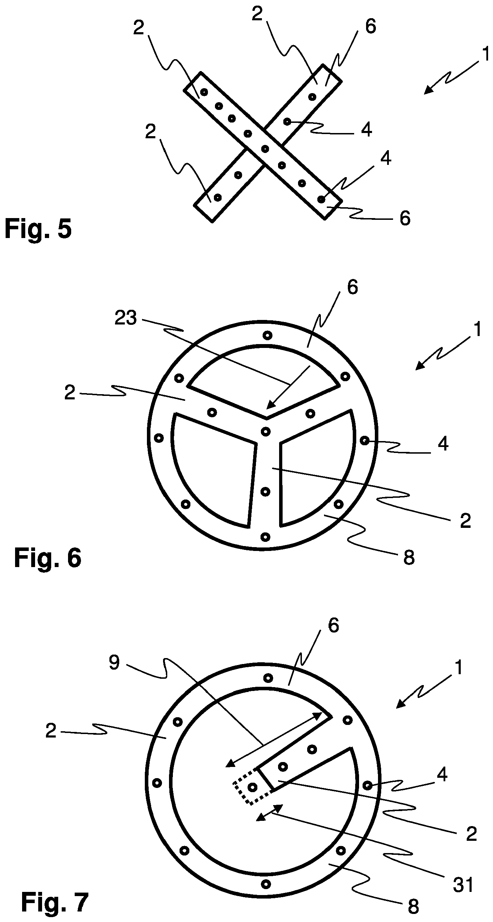

Fig. 5 zeigt schematisch eine Draufsicht auf eine weitere Ausführungsvariante der Tragstruktur 1. Die Draufsicht ist auf die erste Seitenfläche 6 gerichtet, somit ist eine Mehrzahl erster Stifte 4 zu erkennen. Die Tragstruktur 1 umfasst zwei Stege 2, die in einer X-Form relativ zueinander angeordnet sind. Die Stege 2 sind in der Mitte miteinander verbunden.

Fig. 6 zeigt schematisch eine Draufsicht auf eine weitere Ausführungsvariante der Tragstruktur 1. Die Draufsicht ist auf die erste Seitenfläche 6 gerichtet, somit ist eine Mehrzahl erster Stifte 4 zu erkennen. Ein Steg 2 bildet ein äußeres Rahmenteil 8 aus. Dieses Rahmenteil 8 ist in einer Kreisform ausgeführt und mit mindestens einem weiteren Steg 2 verbunden, der von dem äußeren Rahmenteil 8 nach innen weist. Beispielhaft sind hier drei weitere Stege 2 ausgeführt, die von dem äußeren Rahmenteil 8 nach innen weisen und in der Mitte miteinander verbunden sind. Die Innenrichtung 23 ist hier als nach innen weisende, radiale Richtung angegeben. Das äußere Rahmenteil 8 und die drei weiteren Stege 2 sind hier einstückig gebildet. Die drei weiteren Stege 2 sind in einer Y-Form angeordnet.

Fig. 7 zeigt schematisch eine Draufsicht auf eine weitere Ausführungsvariante der Tragstruktur 1 mit einem in der Länge 9 veränderbaren Steg 2, wobei auch hier die Draufsicht auf die erste Seitenfläche 6 gerichtet ist und somit eine Mehrzahl von ersten Stiften 4 zu sehen ist. Ein Steg 2 bildet ein äußeres Rahmenteil 8 aus und ein weiterer Steg 2 weist von dem äußeren Rahmenteil 8 nach innen. Der weitere Steg 2 ist in der Länge 9 veränderbar. Es ist eine beispielhafte Längenänderung 31 des Steges 2 gezeigt.

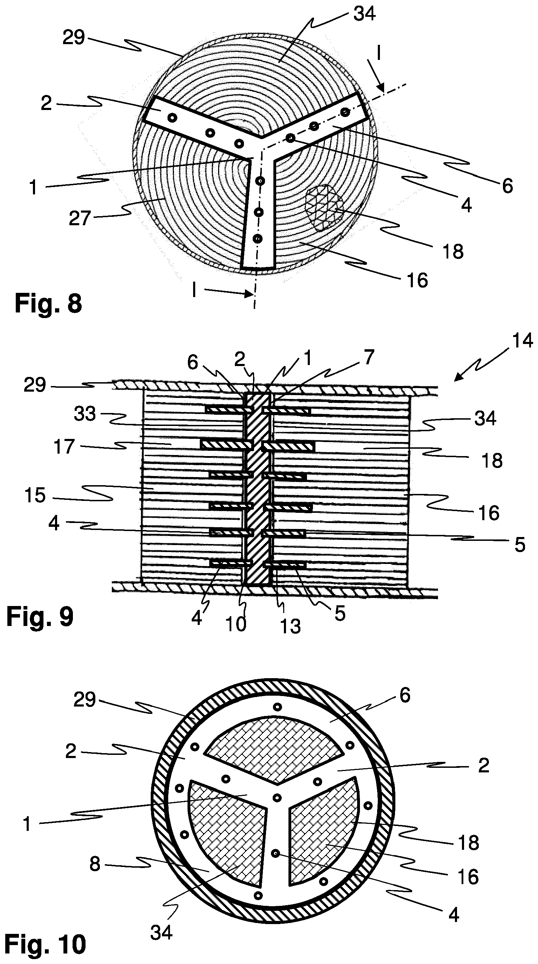

Fig. 8 zeigt schematisch eine Draufsicht auf eine Tragstruktur 1, die mit einem zweiten Wabenkörper 16 verbunden ist. Die Tragstruktur 1 umfasst beispielhaft drei Stege 2, die mittig miteinander verbunden sind und in einer Y- und/oder Stern-Form angeordnet sind. In einem Teilbereich sind die zweiten Hohlräume 18 des zweiten Wabenkörpers 16 angedeutet. Der zweite Wabenkörper 16 ist mit einer Vielzahl von Folien 27 gebildet. Die Draufsicht ist auf die erste Seitenfläche 6 der Tragstruktur 1 und die zweite Stirnseite 34 des zweiten Wabenkörpers 16 gerichtet, somit ist auch eine Mehrzahl erster Stifte 4 zu erkennen. Die Tragstruktur 1 kontaktiert beispielhaft die zweite Stirnseite 34, wobei die zweite Stirnseite 34 hier zumindest teilweise die Querschnittsfläche 3 bildet. Zweite Stifte 5 weisen in die Zeichenebene hinein und sind mit zweiten Hohlräumen 18 des zweiten Wabenkörpers 16 verbunden. Der zweite Wabenkörper 16 ist mit einem Mantelrohr 29 radial nach außen begrenzt sein.

Fig. 9 zeigt schematisch eine Schnittdarstellung einer Vorrichtung 14 mit einer Tragstruktur 1. Die Schnittdarstellung ist beispielhaft gemäß dem in Fig. 8 angedeuteten Schnitt I-I dargestellt. Es ist nicht vorgesehen, dass die Tragstruktur 1 eine Strömung durch die Vorrichtung 14 vollständig verhindert. Es ist ein erster Wabenkörper 15 und ein zweiter Wabenkörper 16 gezeigt, die in einem Mantelrohr 29 angeordnet und nacheinander von einem Abgas durchströmbar sind. Die Tragstruktur 1 weist angrenzend zum ersten Wabenkörper 15 die erste Seitenfläche 6 und zum zweiten Wabenkörper 16 die zweite Seitenfläche 7 auf. Die erste Seitenfläche 6 kann in Kontakt mit der ersten Stirnseite 33 und die zweite Seitenfläche 7 in Kontakt mit der zweiten Stirnseite 34 gelangen. Im Bereich der ersten Seitenfläche 6 ist eine elektrische Isolierung 10 gebildet, die einen elektrischen Stromfluss 22 von dem ersten Wabenkörper 15 hin zum zweiten Wabenkörper 16 verhindert. Beispielhaft ist die Isolierung 10 mit Keramik ausgeführt und insbesondere ist hier die erste Seitenfläche 6 mit der Isolierung 10 beschichtet. Zusätzlich wird eine isolierende Wirkung durch die Stiftisolierung 13 bereitgestellt.

Der erste Wabenkörper 15 und der zweite Wabenkörper 16 sind mittels der Tragstruktur 1 miteinander verbunden und gegeneinander abgestützt. Hierzu greifen die ersten Stifte 4 in erste Hohlräume 17 des ersten Wabenkörpers 15 und die zweiten Stifte 5 in zweite Hohlräume 18 des zweiten Wabenkörpers 16 ein. Die ersten Stifte 4 sind zumindest teilweise mit ersten Hohlräumen 17 und die zweiten Stifte 5 zumindest teilweise mit zweiten Hohlräumen 18 verbunden. Die ersten Stifte 4 und die zweiten Stifte 5 sind hier schematisch dargestellt. Es sind beispielhaft unterschiedliche Stiftlängen und Stiftdurchmesser gezeigt. Gleichwohl werden die ersten Stifte 4 und/oder die zweiten Stifte 5, bezogen auf eine Vorrichtung 14, regelmäßig einheitlich ausgeführt sein.

Fig. 10 zeigt schematisch eine Draufsicht auf eine Tragstruktur 1, die mit einem zweiten Wabenkörper 16 verbunden ist. Die Tragstruktur 1 umfasst beispielhaft drei innere Stege 2 und ein äußeres Rahmenteil 8. Es sind zweite Hohlräume 18 des zweiten Wabenkörpers 16 zu erkennen, die von einem Abgas durchströmbar sind. Die Draufsicht ist auf die erste Seitenfläche 6 der Tragstruktur 1 und die zweite Stirnseite 34 des zweiten Wabenkörpers 16 gerichtet, somit ist auch eine Mehrzahl erster Stifte 4 zu erkennen. Die Tragstruktur 1 liegt beispielhaft auf der zweiten Stirnseite 34 des zweiten Wabenkörpers 16 auf, wobei die zweite Stirnseite 34 zumindest teilweise die Querschnittsfläche 3 bildet. Zweite Stifte 5 weisen in die Zeichenebene hinein und sind mit zweiten Hohlräumen 18 des zweiten Wabenkörpers 16 verbunden. Der zweite Wabenkörper 16 ist mit einem Mantelrohr 29 radial nach außen begrenzt.

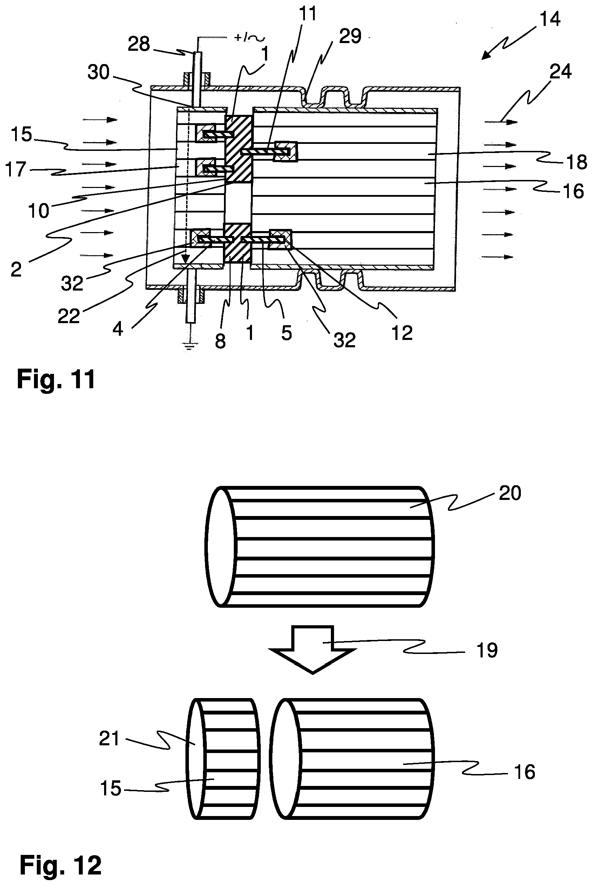

Fig. 12 zeigt schematisch eine Schnittdarstellung einer Vorrichtung 14 mit einer Tragstruktur 1. Die Schnittdarstellung zeigt einen Schnitt durch eine Tragstruktur 1, umfassend ein äußeres Rahmenteil 8 mit mindestens einem weiteren Steg 2, der von dem äußeren Rahmenteil 8 nach innen weist. Die ersten Stifte 4 und die zweiten Stifte 5 haben beispielhaft einen elektrisch nicht-leitenden Körper 11 und eine äußere Metallschicht 32, welche jeweils einen Kopfbereich 12 des ersten Stiftes 4 und des zweiten Stiftes 5 umgibt. Die ersten Stifte 4 sind mit vordefinierten ersten Hohlräumen 17 zumindest teilweise verbunden. Beispielhaft ist die Metallschicht 32 eines ersten Stiftes 4 zumindest teilweise mit mindestens einer Innenseite eines vordefinierten ersten Hohlraumes 17 (stoffschlüssig) verbunden. Die zweiten Stifte 5 sind mit vordefinierten zweiten Hohlräumen 18 zumindest teilweise verbunden. Beispielhaft ist die Metallschicht 32 eines zweiten Stiftes 5 zumindest teilweise mit mindestens einer Innenseite eines vordefinierten zweiten Hohlraumes 18 (stoffschlüssig) verbunden.

Fig. 12 zeigt zudem schematisch und beispielhaft die Hauptströmungsrichtung 24 eines Abgases, welches nacheinander den ersten Wabenkörper 15, die Tragstruktur 1 und den zweiten Wabenkörper 16 durchströmt. Der erste, elektrisch bestrombare Wabenkörper 15 kann mittels mindestens eines Stromanschlusses 28 und mit mindestens einer Stromverteilungsstruktur 30 elektrisch bestromt werden. Somit kann ein Stromfluss 22 durch den ersten Wabenkörper 15 fließen.

Fig. 12 zeigt schematisch ein Abtrennen einer Scheibe 21 von einer Metallwabenstruktur 20. Die Metallwabenstruktur 20 ist mit mindestens einer zumindest teilweise strukturierten Folie 27 gebildet. Die Metallwabenstruktur 20 ist zudem hartgelötet. Mittels eines Trennvorgangs 19 wird eine Scheibe 21 von der Metallwabenstruktur 20 getrennt. Dieser Trennvorgang 19 erfolgt beispielhaft mittels eines Schneiddrahtes. Durch den Trennvorgang 19 wird ein erster Wabenkörper 15 und ein zweiter Wabenkörper 16 gebildet.

Es ist zu erkennen, dass die vorliegende Erfindung eine Tragstruktur angibt, mit der eine möglichst einfach und schnell zu realisierende Verbindung von Wabenkörpern erreicht wird. Die Tragstruktur übernimmt zudem die Funktion einer elektrischen Isolierung. Zudem gibt die Erfindung eine Vorrichtung an, welche einfach und schnell zu verbinden ist und ein Herstellungsverfahren für eine entsprechende Vorrichtung. Darüber hinaus ist ein Verfahren angegeben, mit dem elektrisch bestrombare Wabenkörper einfacher hergestellt werden können, insbesondere schmale elektrisch bestrombare
Wabenkörper mit einem großen Außendurchmesser.

## Patentansprüche

1. Tragstruktur (1) mit mindestens einem Steg (2), der eine Querschnittsfläche (3) überspannt oder einschließt, wobei der mindestens eine Steg (2) eine erste Seitenfläche (6) und eine zweite, gegenüberliegenden Seitenfläche (7) umfasst und eine elektrische Isolierung (10) aufweist, die einen elektrischen Stromfluss (22) von der ersten Seitenfläche (6) zu der zweiten Seitenfläche (7) verhindert, wobei die Tragstruktur (1) weiter eine Mehrzahl von ersten Stiften (4) und zweiten Stiften (5) hat, die sich beidseits des mindestens einen Stegs (2) erstrecken.

2. Tragstruktur nach Patentanspruch 1, wobei mindestens ein Steg (2) ein äußeres Rahmenteil (8) ausbildet und mit mindestens einem weiteren Steg (2), der von dem äußeren Rahmenteil (8) nach innen weist, zumindest verbunden oder verbindbar ist.

3. Tragstruktur nach Patentanspruch 1 oder 2, wobei mindestens ein Teil der ersten oder zweiten Stifte (4, 5) relativ zum Steg (2) beweglich ausgebildet ist.

4. Tragstruktur nach einem der vorhergehenden Patentansprüche, wobei die Tragstruktur (1) mindestens einen Steg (2) umfasst, der zumindest in einer Länge (9) veränderbar ist.

5. Tragstruktur nach einem der vorhergehenden Patentansprüche, wobei zumindest die ersten Stifte (4) oder die zweiten Stifte (5) jeweils mit einem langgestreckten Körper (11) und zwei sich gegenüberliegenden Kopfbereichen (12) ausgeführt sind, wobei eine Stiftisolierung (13) zumindest in dem Körper (11) oder zumindest teilweise um den Körper (11) angeordnet ist und mindestens ein Kopfbereich (12) zumindest teilweise außen mit einem Metall ausgebildet ist.

6. Vorrichtung (14) zur Behandlung von Abgasen, umfassend mindestens einen ersten, elektrisch bestrombaren Wabenkörper (15), der zumindest teilweise durchströmbare erste Hohlräume (17) aufweist und mindestens einen zweiten, benachbart angeordneten Wabenkörper (16), der zumindest teilweise durchströmbare zweite Hohlräume (18) aufweist und mindestens eine zwischen dem ersten Wabenkörper (15) und dem zweiten Wabenkörper (16) angeordnete Tragstruktur (1) gemäß einem der Patentansprüche 1 bis 5, wobei die ersten Stifte (4) zum ersten Wabenkörper (15) und die zweiten Stifte (5) zum zweiten Wabenkörper (16) gerichtet sind und wobei die Tragstruktur (1) den ersten Wabenkörper (15) und den zweiten Wabenkörper (16) voneinander elektrisch isoliert und miteinander verbindet, wobei die ersten Stifte (4) zumindest teilweise mit ersten Hohlräumen (17) verbunden und die zweiten Stifte (5) zumindest teilweise mit zweiten Hohlräumen (18) verbunden sind.

7. Verfahren zur Herstellung einer Vorrichtung (14) zur Behandlung von Abgasen, umfassend mindestens die folgenden Schritte:
(I) Bereitstellen eines ersten Wabenkörpers (15), der zumindest teilweise durchströmbare erste Hohlräume (17) aufweist und eines zweiten Wabenkörpers (16), der zumindest teilweise durchströmbare zweite Hohlräume (18) aufweist,
(II) Bereitstellen einer Tragstruktur (1) nach einem der Patentansprüche 1 bis 5,
(III) Ausrichten der Tragstruktur (1) zwischen dem ersten Wabenkörper (15) und dem zweiten Wabenkörper (16), wobei die ersten Stifte (4) zum ersten Wabenkörper (15) und die zweiten Stifte (5) zum zweiten Wabenkörper (16) ausgerichtet werden und wobei die ersten Stifte (4) zumindest teilweise in erste Hohlräume (17) eingeführt werden und die zweiten Stifte (5) zumindest teilweise in zweite Hohlräume (18) eingeführt werden,
(IV) Verbinden der Tragstruktur (1) mit dem ersten Wabenkörper (15) und dem zweiten Wabenkörper (16).

8. Verfahren nach Patentanspruch 7, wobei in Schritt (III) zumindest ein Teil der ersten Stifte (4) oder ein Teil der zweiten Stifte (5) relativ zum Steg (2) bewegt wird.

9. Verfahren nach Patentanspruch 7 oder 8, wobei Schritt (I) eine Herstellung zumindest des ersten Wabenkörpers (15) oder des zweiten Wabenkörpers (16) mindestens die folgenden Zwischenschritte umfasst:
(Ia) Erzeugen einer Metallwabenstruktur (20) mit mindestens einer zumindest teilweise strukturierten metallischen Folie (27),
(Ib) Löten (Hartlöten) oder Schweißen der Metallwabenstruktur (20),
(Ic) Abtrennen einer Scheibe (21) von der Metallwabenstruktur (20), zur Bildung zumindest des ersten Wabenkörpers (15) oder des zweiten Wabenkörpers (16).

10. Verfahren nach einem der Patentansprüche 7 bis 9, wobei in Schritt (IV) die Verbindung mittels eines Lötvorgangs (Hartlötvorgangs) erfolgt, wobei die ersten Stifte (4) zumindest teilweise mit ersten Hohlräumen (17) verbunden werden und die zweiten Stifte (5) zumindest teilweise mit zweiten Hohlräumen (18) verbunden werden.

## Claims

1. Supporting structure (1) having at least one web (2) which spans or encloses a cross-sectional area (3), wherein the at least one web (2) comprises a first side surface (6) and having second, oppositely situated side surface (7) and has an electrical insulator (10) which prevents an electrical current flow (22) from the first side surface (6) to the second side surface (7), wherein the supporting structure (1) furthermore has a multiplicity of first pins (4) and second pins (5) which extend to both sides of the at least one web (2).

2. Supporting structure according to Patent Claim 1, wherein at least one web (2) forms an outer frame part (8) and is at least connected or connectable to at least one further web (2) which points inward from the outer frame part (8).

3. Supporting structure according to Patent Claim 1 or 2, wherein at least a part of the first or second pins (4, 5) is formed so as to be movable relative to the web (2).

4. Supporting structure according to one of the preceding patent claims, wherein the supporting structure (1) comprises at least one web (2) which is variable at least in terms of a length (9).

5. Supporting structure according to one of the preceding patent claims, wherein at least the first pins (4) or the second pins (5) are formed in each case with an elongate body (11) and two mutually oppositely situated tip regions (12), wherein a pin insulator (13) is arranged at least in the body (11) or at least partially around the body (11), and at least one tip region (12) is at least partially formed, on the outside, with a metal.

6. Device (14) for the treatment of exhaust gases, comprising at least one first, electrically energizable honeycomb body (15) which has first cavities (17) which can at least partially be passed through by a flow, and at least one second, adjacently arranged honeycomb body (16), which has second cavities (18) which can at least partially be passed through by a flow, and at least one supporting structure (1) according to one of Patent Claims 1 to 5 arranged between the first honeycomb body (15) and the second honeycomb body (16), wherein the first pins (4) are directed toward the first honeycomb body (15) and the second pins (5) are directed toward the second honeycomb body (16), and wherein the supporting structure (1) electrically insulates the first honeycomb body (15) and the second honeycomb body (16) with respect to one another and connects these to one another, wherein the first pins (4) are at least partially connected to first cavities (17) and the second pins (5) are at least partially connected to second cavities (18).

7. Method for producing a device (14) for the treatment of exhaust gases, comprising at least the following steps:
(I) providing a first honeycomb body (15), which has first cavities (17) which can at least partially be passed through by a flow, and a second honeycomb body (16), which has second cavities (18) which can be at least partially passed through by a flow,
(II) providing a supporting structure (1) according to one of Patent Claims 1 to 5,
(III) orienting the supporting structure (1) between the first honeycomb body (15) and the second honeycomb body (16), wherein the first pins (4) are oriented toward the first honeycomb body (15) and the second pins (5) are oriented toward the second honeycomb body (16), and wherein the first pins (4) are at least partially inserted into first cavities (17) and the second pins (5) are at least partially inserted into second cavities (18), (IV) connecting the supporting structure (1) to the first honeycomb body (15) and to the second honeycomb body (16).

8. Method according to Patent Claim 7, wherein, in step (III), at least a part of the first pins (4) or a part of the second pins (5) is moved relative to the web (2).

9. Method according to Patent Claim 7 or 8, wherein step (I) comprises production at least of the first honeycomb body (15) or of the second honeycomb body (16) at least the following intermediate steps:
(Ia) generating a metallic honeycomb structure (20) with at least one at least partially structured metallic foil (27),
(Ib) soldering (brazing) or welding the metal honeycomb structure (20),
(Ic) separating off a disk (21) from the metal honeycomb structure (20) in order to form at least the first honeycomb body (15) or the second honeycomb body (16).

10. Method according to one of Patent Claims 7 to 9, wherein, in step (IV), the connection is realized by way of a soldering process (brazing process), wherein the first pins (4) are at least partially connected to first cavities (17), and the second pins (5) are at least partially connected to second cavities (18).

## Revendications

1. Structure porteuse (1) comprenant au moins une membrure (2) qui couvre ou inclut une surface en section transversale (3), l'au moins une membrure (2) comprenant une première surface latérale (6) et une deuxième surface latérale opposée (7), présentant une isolation électrique (10) qui empêche un flux de courant électrique (22) depuis la première surface latérale (6) jusqu'à la deuxième surface latérale (7), la structure porteuse (1) présentant en outre une pluralité de premières broches (4) et de deuxièmes broches (5) qui s'étendent de part et d'autre de l'au moins une membrure (2).

2. Structure porteuse selon la revendication 1, dans laquelle au moins une membrure (2) constitue une partie de cadre extérieure (8) et est ou peut être au moins connectée à au moins une membrure supplémentaire (2) qui est tournée vers l'intérieur depuis la partie de cadre extérieure (8).

3. Structure porteuse selon la revendication 1 ou 2, dans laquelle au moins une partie des premières ou des deuxièmes broches (4, 5) est réalisée de manière déplaçable par rapport à la membrure (2).

4. Structure porteuse selon l'une quelconque des revendications précédentes, dans laquelle la structure porteuse (1) comprend au moins une membrure (2) dont au moins une longueur (9) peut être variée.

5. Structure porteuse selon l'une quelconque des revendications précédentes, dans laquelle au moins les premières broches (4) ou les deuxièmes broches (5) sont à chaque fois réalisées avec un corps allongé (11) et avec deux régions de tête opposées (12), une isolation de broche (13) étant disposée au moins dans le corps (11) ou au moins en partie autour du corps (11) et au moins une région de tête (12) étant réalisée au moins en partie à l'extérieur avec un métal.

6. Dispositif (14) pour le traitement de gaz d'échappement, comprenant au moins un premier corps en nid d'abeilles (15) pouvant être alimenté en courant électrique, qui présente des premières cavités (17) pouvant être parcourues au moins en partie par un écoulement et au moins un deuxième corps en nid d'abeilles (16) disposé en position adjacente, qui présente des deuxièmes cavités (18) pouvant être parcourues au moins en partie par un écoulement et au moins une structure porteuse (1) selon l'une quelconque des revendications 1 à 5 disposée entre le premier corps en nid d'abeilles (15) et le deuxième corps en nid d'abeilles (16), les premières broches (4) étant orientées vers le premier corps en nid d'abeilles (15) et les deuxièmes broches (5) étant orientées vers le deuxième corps en nid d'abeilles (16) et la structure porteuse (1) isolant électriquement l'un de l'autre et reliant l'un à l'autre le premier corps en nid d'abeilles (15) et le deuxième corps en nid d'abeilles (16), les premières broches (4) étant connectées au moins en partie à des premières cavités (17) et les deuxièmes broches (5) étant connectées au moins en partie à des deuxièmes cavités (18).

7. Procédé de fabrication d'un dispositif (14) pour le traitement de gaz d'échappement, comprenant au moins les étapes suivantes :
(I) fourniture d'un premier corps en nid d'abeilles (15) qui présente des premières cavités (17) pouvant être parcourues au moins en partie par un écoulement et d'un deuxième corps en nid d'abeilles (16) qui présente des deuxièmes cavités (18) pouvant être parcourues au moins en partie par un écoulement,
(II) fourniture d'une structure porteuse (1) selon l'une quelconque des revendications 1 à 5,
(III) orientation de la structure porteuse (1) entre le premier corps en nid d'abeilles (15) et le deuxième corps en nid d'abeilles (16), les premières broches (4) étant orientées vers le premier corps en nid d'abeilles (15) et les deuxièmes broches (5) étant orientées vers le deuxième corps en nid d'abeilles (16) et les premières broches (4) étant insérées au moins en partie dans des premières cavités (17) et les deuxièmes broches (5) étant insérées au moins en partie dans des deuxièmes cavités (18),
(IV) connexion de la structure porteuse (1) au premier corps en nid d'abeilles (15) et au deuxième corps en nid d'abeilles (16).

8. Procédé selon la revendication 7, dans lequel, à l'étape (III), au moins une partie des premières broches (4) ou une partie des deuxièmes broches (5) est déplacée par rapport à la membrure (2).

9. Procédé selon la revendication 7 ou 8, dans lequel l'étape (I) une fabrication au moins du premier corps en nid d'abeilles (15) ou du deuxième corps en nid d'abeilles (16) comprend au moins les étapes intermédiaires suivantes :
(Ia) production d'une structure métallique en nid d'abeilles (20) avec au moins un film métallique au moins en partie structuré (27),
(Ib) brasage (brasage dur) ou soudage de la structure métallique en nid d'abeilles (20),
(Ic) séparation d'un disque (21) de la structure métallique en nid d'abeilles (20) pour former au moins le premier corps en nid d'abeilles (15) ou le deuxième corps en nid d'abeilles (16).

10. Procédé selon l'une quelconque des revendications 7 à 9, dans lequel, à l'étape (IV), la connexion s'effectue au moyen d'une opération de brasage (opération de brasage dur), les premières broches (4) étant connectées au moins en partie à des premières cavités (17) et les deuxièmes broches (5) étant connectées au moins en partie à des deuxièmes cavités (18).
